# EUROPEAN PATENT SPECIFICATION

(11) **EP 3 471 514 B1**
(45) Date of publication and mention of the grant of the patent: **21.04.2021**
(21) Application number: 18198130.9
(22) Date of filing: 02.10.2018
(51) Int. Cl.: H05B 47/155, H05B 47/185, B64F 1/18

(54) **LIGHTING SYSTEM WITH FACILITATED FIRMWARE UPDATING**
BELEUCHTUNGSSYSTEM MIT VEREINFACHTER FIRMWAREAKTUALISIERUNG
SYSTÈME D'ÉCLAIRAGE AVEC MISE À JOUR DE MICROLOGICIEL FACILITÉE

(30) Priority: 10.10.2017 IT 201700113786
(43) Date of publication of application: 17.04.2019
(73) Proprietor: Energy Technology S.r.l., 40056 Valsamoggia (BO) (IT)
(72) Inventor: FACCHINI, Gianni, 44047 San Carlo (Ferrara) (IT); PAGANI, Luca, 40128 Bologna (IT); MAZZOTTI, Matteo, 48034 Fusignano (Ravenna) (IT); RIZZOLI, Fabio Cesare, 40125 Bologna (IT)
(74) Representative: Milli, Simone

(56) References cited:
- WO-A2-03/055273
- FR-A1- 3 038 478
- GB-A- 2 406 977
- US-A- 5 243 340
- US-A1- 2007 268 151
- US-A1- 2008 136 334

## Description

This invention relates to a lighting system, in particular provided for airport contexts (landing runways and nearby areas).

In more detail, the invention relates to a lighting system in which the actuation of the firmware updating on the various components is simplified. There are prior art lighting systems in the airport sector comprising luminous or light sources, generally of the LED type, and distributed in a raised fashion, on suitable supports, and/or built in, in suitable housings, along the runways and nearby areas, with the aim of generating signalling lights useful for guiding the aircraft during the manoeuvring phases.

Of particular importance amongst the systems typically used there are the flashing lights, amongst which there are those with the function of landing signalling (for example SFL, sequential flashing light), threshold (for example RTIL, runway threshold indicator lights) and guidance (CGL, circling guidance light) inside the airport area. Typically, these flashing lights are used to reinforce the other fixed light signalling systems.

The above-mentioned flashing systems may comprise a large number of lights, to which electricity is supplied by a power cable, connected to a power supply unit.

The aim is to create combinations of lights, for example for generating a sequential flashing light (SFL) which starts from the light furthest away from the runway and ends with the one (or those, if several lights flash simultaneously) closest to the runway.

In another case, some lights can be grouped into clusters (also called flashing groups) in each of which the lights flash simultaneously, since they are physically adjacent and/or because they delimit zones located at the same distance from a reference point, or at the sides of the threshold of the runway.

It should be noted that the lights also flash with different luminous intensities: the combination between the current which passes through the circuit of the LED and the switching on time of the light in relation to the rest time determines the luminous intensity perceived by the eyes of the pilot landing. On the basis of the recommendations of the regulatory authorities, three levels of luminosity are planned, of which one high (100% intensity), one intermediate (30%) and one low (10%) for the most favourable conditions (at night with maximum visibility).

As it is therefore necessary to activate the lights according to different configurations, different times and frequencies and different groups, the large number of different combinations of their operation is clearly evident. Accordingly, each lighting system is equipped with a unit designed to control a light (flash field unit, FFU) of a power/monitoring/control module which is controlled by means of encoded messages, transmitted, for example, with power-line-communication along the power supply line.

In the module there is an electronic processing device equipped with firmware which processes the messages received to determine the correct times for switching on the LED light, interprets the synchronisation messages with the other lights, performs diagnostic operations and sends messages corresponding to the results, and other operations to keep under control their temperature and their general operating conditions and other electrical parameters and events, such as abnormal operation sequences, re-starting, commands which are incorrect and/or outside specification. In this way, the network coordinator is able to retrieve information on these faults and, if necessary, intervene.

For example, document US 2008/136334 A1 discloses a system and method for controlling lighting, e.g. for controlling generation of light from the one or more lighting devices within a lighting system, in response to an external input. The control system generally comprises a control interface module and a light generation module. The control interface module is configured to receive the external input and convert same in accordance with a predefined internal control protocol. The light generation module is communicatively linked to the control interface module to receive the converted input and is operatively linked to the one or more light-emitting element modules for controlling generation of light thereby in accordance with the converted input.

For example, document US 2007/268151 A1 describes a method for programming an operating device for lighting, wherein the operating device comprises firmware and an interface for receiving external control commands for operating the lighting. This method includes at least partially programming the firmware of the operating device or the interface by transmitting additional information to the interface. This can conveniently be accomplished while the operating device is in operation. Typical lighting of the invention is the type that includes an electronic ballast for gas discharge lamps.

Also, documents FR 3038478 A1, US 5243340 A, GB2406977 A and WO 03/055273 A2 may be of interest for the instant application.

It should therefore be noted that in this context there is a strongly felt need to be able to intervene for modifying and in particular updating the firmware easily and quickly, making the operations for modernisation of the systems easy and fast, with the addition and/or removal of FFU units and relative LED lights, the addition of new messages for operating methods according to new standards, the addition and/or replacement of algorithms present in the firmware for determining the switching on (T_{base}) and switching off (T_{off}) times of the lights and processing of the parameters measured during diagnosis operations, increase or reduction of the number of LED illuminators installed, introduction of new communication protocols with remote systems, etc.

Yet another aim of the invention is to provide the lighting system with the possibility of carrying out additional and configuration services, without substantially modifying the structure of the system within the scope of the invention.

Another aim of the invention is to provide the lighting system with a diagnostics algorithm which allows malfunctions to be detected with greater selectivity, timeliness and efficiency.

Yet another aim of the invention is to provide a lighting system which makes it possible to reduce the management costs.

A further aim of this invention is to provide a lighting system which is particularly reliable.

According to the invention, these aims are achieved by a lighting system according to the invention, comprising the technical features described in one or more of the appended claims.

The technical features of the disclosure, with reference to the above aims, are clearly described in the claims below and its advantages are apparent from the detailed description which follows, with reference to the accompanying drawings which illustrate a preferred, non-limiting example embodiment, and in which:
- Figure 1 is a schematic view of the lighting system according to the invention;
- Figures 2 and 3 show two embodiments of the signalling lights.

With reference to the accompanying schematic drawing, the numeral 1 denotes a traditional flashing lighting system, purely by way of a non-limiting example, provided for airport contexts (runways and nearby areas).

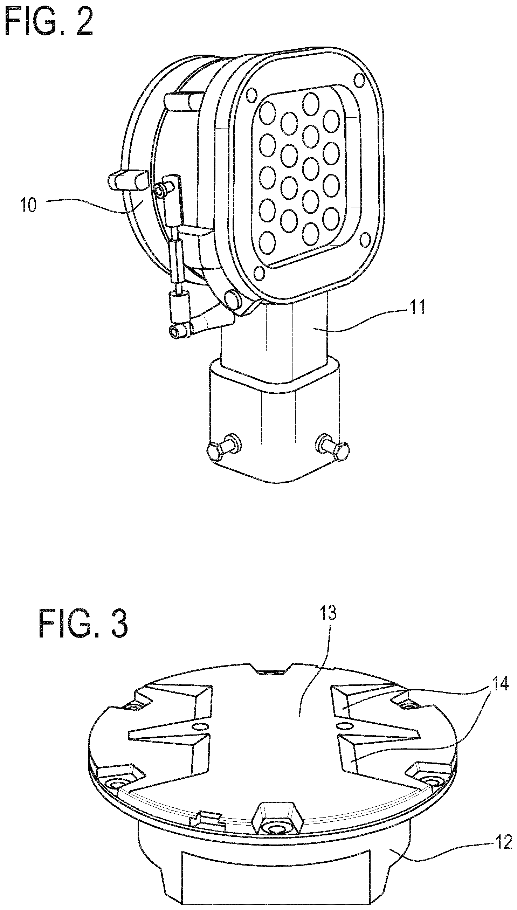

The system comprises LED illuminators 3, which constitute elevated and/or inset lights, which can have different photometric and flashing features. The so-called elevated lights (Figure 2) are enclosed inside a suitable casing 10, which forms a sort of the projector, mounted on a corresponding support 11 which supports it at a predetermined height above ground.

On the other hand, the so-called inset lights are each located in a flat casing 12, which is buried in the ground remaining substantially with the upper surface 13, in which windows 14 are made from which the light beams leave, flush with ground level.

The number of lights of the system may vary: typically, the number of lights used is 32 (30 SFL + 2 RTIL), but systems can be provided with a different number of light sources.

The SFL system is configured for generating a sequential flashing light which starts from the light furthest away from the runway and ends with the one (or those, if several lights flash simultaneously) closest to the runway.

The international regulations require that these light sequences can be generated at a rhythm of 1 or 2 per second.

As stated in the introduction, the lights can be grouped together in clusters (so-called flashing groups) and flash simultaneously. The luminous intensity of the lights can be adjusted.

For this reason, the lighting system 1 comprises a plurality of LED illuminators 3 electrically connected to an electrical power cable 2, configured to convey a power supply current and having at least one end 2A coupled to a device 5, designed to supply current in the power cable 2 or directly to the electrical distribution network (of the conventional type).

It should be noted that, generally, the power cable 2 is a particularly long electrical cable, since it can be positioned to cover the entire length of the landing area.

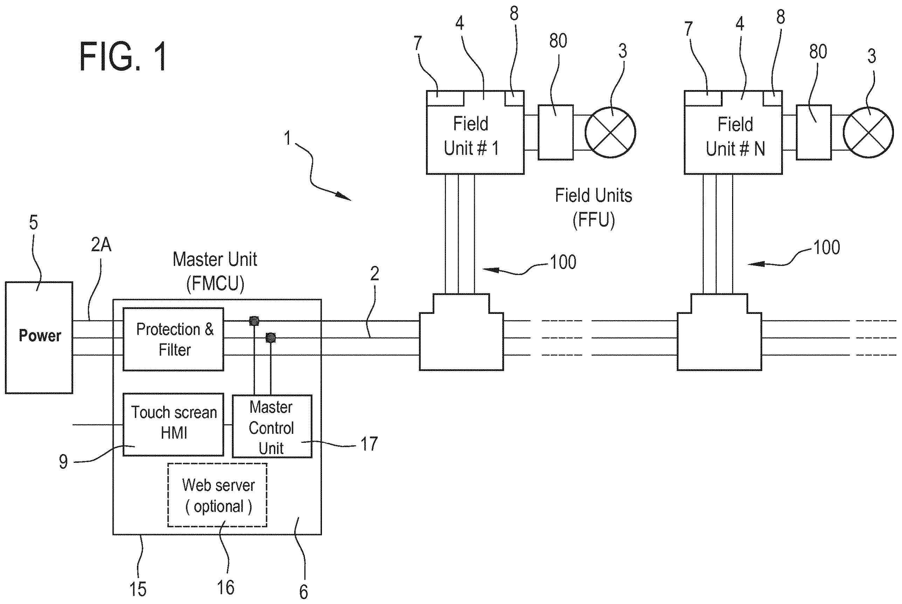

In other words, the illuminators 3 receive electrical power through the power cable 2, preferably using suitable junction boxes 100. The illuminators 3 are distributed along the power cable 2 (Figure 1). Preferably, each illuminator 3 is equipped with one or more LEDs designed to emit an illumination beam.

It should be noted that the LED lights 3 are powered by power supply modules/monitoring/control, labelled 4 in the accompanying drawings.

In particular, for each illuminator 3 the respective power/monitoring/control module 4 is equipped with an electronic process device, designed to perform for monitoring and control operations and process data on the basis of a predetermined firmware recorded in it.

The firmware operates by exchanging, interpreting and processing a series of encoded messages sent to it by a central control unit 6, acting on each power/monitoring/control module 4, by means of power-line-communication which travels along the power cable 2.

In more detail, each power/monitoring/control module 4 comprises a communication and control unit 7, designed to allow and control the exchange of messages with the central control unit 6.

The form and the configuration of the communication and control unit 7 will be evident and easy to understand for a technical expert in the trade.

Moreover, each module 4 controls the relative illuminator 3 by means of a control circuit 8 designed to control the switching on and, respectively, the switching off of the LED illuminator 3.

The numeral 80 in Figure 1 denotes an electrical connection system between the field unit and the LED illuminator 3.

With regard to the central control unit 6, it comprises a communication and control unit 17 which is able to receive/transmit the messages by power-line-communication along the power cable 2 for controlling the power/monitoring/control modules 4.

This allows the central control unit 6 to manage and coordinate the switching on/off of the LED lights 3, synchronising the operation between the power/monitoring/control modules 4, modifying the configuration parameters, receiving status and diagnostic information from the modules 4 and, if necessary, processing them before sending to the remote control system.

In more detail, the central control unit 6 comprises a touch screen panel 9 connected to the communication and control unit 17 and on which is activated an interface towards the user by means of which is displayed the information exchanged with the power/monitoring/control modules 4, as well as the results of the diagnostic operations carried out.

Moreover, by means of the touch screen panel 9 it is possible to perform maintenance operations and/or give commands and send messages to the power/monitoring/control modules 4, all by power-line-communication along the power supply cable 2.

In practice, for making the system according to the invention, a master unit (central control unit 6 - FMCU) and several slave units are prepared, each consisting of a power/monitoring/control module 4 (FFU) which enable or, respectively, disable the operation of the light sources (LED illuminators 3).

It should be noted that, through the sending of the encoded messages, digital information is transmitted by the central control unit 6 to the modules 4, and, through this digital information, each module 4 is able to regulate the brightness, synchronisation, determine the starting and switching off times of the relative LED illuminator 3, as well as for diagnostic operations.

Basically, the communication and synchronisation system between the units is based on exchanges of power-line-communication messages according to industrial standards of the type known in the sector. By means of these standards, in addition to the normal controls for the switching on and off of the lights, regular controls are performed on the synchronisation of the system to check the consistency of the time reference shared by all the units in the field by the alignment of some internal timers. This synchronisation is fundamental as it ensures that the switching on sequence of the lights is correct and that the sequence of lights actually appears as such.

According to a first aspect of this invention, updating versions of the firmware and configuration messages of the power/monitoring/control modules 4 are also sent towards the power/monitoring/control modules 4 by means of power-line-communication along the power cable 2.

This feature makes it possible to update and/or modify quickly and easily the firmware present in one or more or all the modules 4, making the system extremely versatile and easy to control/maintain, even remotely.

The messages which travel along the power cable 2 are packets of variable length, and may be of a broadcast or unicast type. They may comprise the sending of a confirmation (ACK/NACK) or not.

During normal operation it is the master unit which communicates with the slave units and the slave units exchange messages between each other, but inter-slave communication strategies are however possible, such as, for example, the relaying (repetition) of messages. There is also a sequence control to prevent misalignment in the interactions of a request/response type.

As well as the updating of the firmware it is possible to send configured messages, the system configured in accordance with the invention also allowing the installation of new illuminators 3 equipped with respective modules 4, or their removal, to be carried out quickly and easily.

Once the illuminators 3 have been positioned and the relative modules 4 connected with the communication and control unit 7 connected to the power cable 2, it will be sufficient for the central control unit 6 to send configuration messages for the new modules, as well as update the remaining modules, which must take into account the additional modules with respect to the synchronisation.

For this purpose, the module 4 to be configured (FFU) is connected to the system, which sends a signal of its presence to the master (FMCU - central control unit 6).

The operator present at the FMCU unit perceives the switching on and the connection to the Internet of the new module to be configured and can select the parameters to be sent acting directly on the interface of the touch screen panel 9 present in the central control unit 6. When it is ready, the start of the configuration may be confirmed.

The master unit FMCU (central control unit 6) sends to the slave unit FFU (4) the configuration module which comprises the parameters of the system and the individual ones of the LED illuminator 3. The latter are typically:
- the ID of the LED illuminator, a progressive and unique number inside the system,
- the flashing group of the LED illuminator, another numerical parameter.
- the flashing duration: the inset units typically have a flashing with duration T*_{base}* greater than that of the elevated units.

If the illuminators are removed, the remaining modules 4 are updated for the same reasons mentioned above.

The system described therefore allows a method to be carried out for the updating of firmware resident and operating in the power/monitoring/control modules 4 of a lighting system 1 by sending encoded messages by means of power-line-communication along the power cable 2.

The above-mentioned method also comprises the updating of the software present and operating in the communication and control unit 17 by means of sending from a remote power-line-communication station along the power supply cable 2 which connects the central control unit 6 with the modules 4.

In accordance with a second aspect of the invention, associated with the central control unit 6 there is also a web server 16, connected using suitable interface to the power cable 2.

The preparation of the Web server 16 allows additional services to be provided, such as the logging of events or the access by Web interface.

This further feature also allows control and diagnostic operations to be performed from a remote position, that is, not close to the central control unit 6.

In the same way, it is possible to carry out the necessary or desired updating of the firmware, both on the modules and on the communication and control unit (17), from a remote position. A third aspect of the invention, which is strictly linked to the two previous aspects, is the provision of a diagnostic algorithm which is performed by means of the exchange of messages between the central control unit 6 and the power/monitoring/control modules 4 in two separate parts.

A first part is carried out periodically and automatically at regular intervals and consists in the request, in rotation, of the main parameters of each FFU unit which can, once analysed, indicate the presence of problems.

For example, the aim is to detect malfunctions of medium or serious extent, over-currents, over-voltages, temporary voltage drops, unplanned re-starts, time references of modules, generic status parameters (active, configured, calibrated module). If a module does not respond to this interrogation, the problem is signalled to the coordination system and to the remote control. If, once it has been declared as absent, a module reappears in the system, it is automatically re-included in the automatic diagnostic cycle and its return is signalled to the network coordinator and, through it, to the remote control.

A second part is performed, on the other hand, on request and specifically for a single power/monitoring/control module 4 in a selected moment, to obtain additional information items with respect to the standard information.

The additional information relates to several physical parameters, for example the temperature measured on the power/monitoring/control module 4, but also specific parameters for use by the maintenance technician such as the version of the firmware present on the module.

The execution of the diagnostic algorithm in two parts also occurs by means of power-line-communication along the power cable 2. The execution system makes it possible to perform the test system which comprises the execution of the algorithm at any time and very easily.

The execution of the second part of the algorithm can be started from the touch panel 9 of the central control unit 6, from the remote control system, and, if necessary, using the Web server 16, even from a remote position, thanks to an Internet connection.

In order to obtain a more ordered configuration, the central control unit 6 is located with all its components inside a control cabin 15.

In other terms, by using the interface of the system touch screen panel 9 it possible to:
- send commands for switching on/off the flash system,
- modify the configuration parameters of the system which can be changed with the system already installed,
- modify the overall configuration parameters of the system (necessarily before installation of the first module of the system),
- install a new module,
- uninstall a module installed previously,
- reset the entire system to return it to factory settings,
- make a request for diagnostic data on a single module,
- display a graphic screen summarising the status of the entire system,
- calibrate a module (following a new installation),
- modify the durations of the flashing times,
- carry out tests on a single light and access other functions which can only be used by the system installer,
- manage a MODBUS interface (TCP or serial) opening, closing and controlling the connectivity, and thereby making the responses to be provided in this context.

The advantages of the invention are fully apparent.

The international regulations require that these light sequences can be generated at a rhythm of 1 or 2 per second, but thanks to the system shown by way of example according to the invention it is possible to personalise the frequency extremely easily and quickly.

Moreover, it is possible to implement personalised light patterns and group together the lights in clusters (also called flashing groups) which flash simultaneously.

The lights may also flash with different luminous intensities: the combination between the current which passes through the LEDs and the switching on time of the light in relation to its rest time (T*ₒₙ*/(T*ₒₙ*+T*_{off}*) = duty cycle) determines the luminous intensity perceived by the eyes of the pilot landing.

All these parameters can be varied easily in real time, also with predetermined settings.

It is possible to provide the flashing mode and synchronisation between the various units which is even more personalised, on the basis of specific requirements of the user.

The system may be pre-configured in the factory for delivery ready for use, or installation and configuration can be carried out directly in the field.

Is also possible to modify some aspects of the configuration directly in the field and after installation has been performed. Moreover, in the case of a fault of a module or of an illuminator, it is possible to use the touch panel 9 for replacing the device with a new and operational one.

In addition, the proposed lighting system 1 makes it possible to reduce the costs for the lighting and the management, because the firmware is advantageously modified with ease, and makes possible an easy modification of the operating parameters of the system.

Moreover, a further advantage of the proposed system 1 is to increase the overall reliability, as it comprises the execution of an algorithm divided into two parts, of which one is automatic and one is performed in an arbitrary fashion. The controls need not, therefore, be carried out only periodically, but also when the control operator senses or actually detects that a malfunction may have occurred.

The invention also defines a method for updating the firmware application for the modules 4 which comprises the use of power-line-communication along the power cable 2.

## Claims

1. A flashing lighting system (1), comprising:
- a plurality of LED illuminators (3),
- a power cable (2) electrically connected to the plurality of LED illuminators (3) and configured to power said plurality of LED illuminators (3);
- a plurality of power/monitoring/control modules (4), each power/monitoring/control module (4) associated with a respective LED illuminator (3) and equipped with an electronic processing device designed to carry out monitoring and control operations of the respective LED illuminator (3) and to process data based on a predetermined firmware recorded therein;
- a power supply device (5) electrically connected to said power cable (2);
- a central control unit (6) configured to send and receive encoded messages to and from each power/monitoring/control module (4), wherein the electronic processing device of each power/ monitoring/control module (4) is configured to process the received encoded messages to determine times for switching on and off the respective LED illuminator (3), to verify synchronization with switching on and off of other LED illuminators (3), to perform diagnostic operations and send encoded messages corresponding to the results of said diagnostic operations, and other operations to keep under control the temperature, general operating conditions, other electrical parameters and events of the respective power/monitoring/control module (4);
the lighting system (1) being **characterised in that** the central control unit (6) is further configured to send, towards the power/monitoring/control modules (4) of the lighting system (1), updating versions of the firmware and configuration messages of the power/monitoring/control modules (4),
wherein the central control unit (6) is configured such as to transmit the encoded messages, as well as the updating versions of the firmware and configuration messages of the power/monitoring/control modules (4) by power-line-communication along the power cable (2),
wherein the central control unit (6) and the power/monitoring/control modules (4) are configured for performing, using power-line-communication sent along the power cable (2) and by means of exchange of the encoded messages, a diagnostic algorithm, the diagnostic algorithm being divided into two parts:
- a first part executed periodically and automatically to obtain main parameters of each power/monitoring/control module (4) to check for the presence of malfunctions of a medium or serious nature, and
- a second part executable on request specifically for a single power/monitoring/control module (4) in a selected moment, to obtain further information and further physical parameters comprising temperature measured on the power/monitoring/control module (4), operating parameters, version of firmware present on the power/monitoring/control module (4), the second part being carried out, by the central control unit (6) and the power/monitoring/control modules (4) by means of exchange of the encoded messages between the central control unit (6) and the power/monitoring/control modules (4), when a control operator detects that a malfunction occurs,
wherein the central control unit (6) comprises a communication and control unit (17), which is configured to receive/transmit the encoded messages by power-line-communication along said power cable (2) for controlling said power/monitoring/control modules (4) in order to switch on/off respective LED illuminators (3), synchronise with other power/monitoring/control modules (4), modify configuration parameters, transmit status and diagnostic information, and
wherein the central control unit (6) further comprises a touch screen panel (9) connected with said communication and control unit (17), which implements a user interface through which encoded messages, transmitted to and received from said power/monitoring/control modules (4) as well as results of the diagnostic operations performed are displayed and through which maintenance operations are performed, all by means of power-line-communication along said power cable (2), wherein at least a request for diagnostic data on a single module is made using the interface of the system touch screen panel (9).

2. The lighting system (1) according to claim 1, wherein the electronic processing device of each power/monitoring/control module (4) comprises a communication and control unit (7), for the exchange of encoded messages with the central control unit (6) and management of the respective LED illuminator (3), a control circuit (8) for controlling the switching on and, respectively, the switching off of the relative LED illuminator (3).

3. The lighting system (1) according to claim 1 or 2, further comprising a web server (16) connected by suitable interface to the power cable (2) to ensure additional services, the additional services comprising logging of events or access by Web interface.

4. The lighting system (1) according to claim 1 and 3, wherein the web server (16) is configured to allow further control and diagnostic operations to be performed from a remote position, as well as to perform updates of the firmware both on the modules and on the communication and control unit (17).

5. The lighting system (1) according to any one of claims 1 to 4, comprising a control cabin (15), wherein the central control unit (6) is located inside the control cabin (15).

6. The lighting system (1) according to any one of claims 1 to 5, configured to be used for signalling purposes in an airport area, wherein the LED illuminators (3) are positioned on raised supports and/or built into suitable housings, along landing runways and nearby areas.

## Patentansprüche

1. Blinkendes Beleuchtungssystem (1), umfassend:
- eine Vielzahl an LED-Beleuchtern (3),
- ein Stromkabel (2), das elektrisch mit der Vielzahl an LED-Beleuchtern (3) verbunden und ausgebildet ist, um die Vielzahl an LED-Beleuchtern (3) mit Strom zu versorgen;
- eine Vielzahl an Leistungs-/Überwachungs-/Steuermodulen (4), wobei ein jedes Leistungs-/Überwachungs-/Steuermodul (4) mit einem jeweiligen LED-Beleuchter (3) assoziiert ist und mit einer elektronischen Verarbeitungsvorrichtung ausgestattet ist, die zur Durchführung von Überwachungs- und Steuervorgängen des jeweiligen LED-Beleuchters (3) und zum Verarbeiten von Daten basierend auf einer darin aufgezeichneten vorbestimmten Firmware ausgelegt ist;
- eine Stromversorgungsvorrichtung (5), die elektrisch mit dem Stromkabel (2) verbunden ist;
- eine zentrale Steuereinheit (6), die ausgebildet ist, um codierte Nachrichten an ein jedes Leistungs-/Überwachungs-/Steuermodul (4) zu senden und sie von diesem zu empfangen, wobei die elektronische Verarbeitungsvorrichtung eines jeden Leistungs-/Überwachungs-/Steuermoduls (4) ausgebildet ist, um die empfangenen codierten Nachrichten zu verarbeiten, um Zeiten zum Ein- und Ausschalten des jeweiligen LED-Beleuchters (3) zu bestimmen, um die Synchronisation mit dem Ein- und Ausschalten anderer LED-Beleuchtern (3) zu überprüfen, um Diagnosevorgänge durchzuführen und codierte Nachrichten zu senden, die den Ergebnissen dieser Diagnosevorgänge entsprechen, sowie andere Vorgänge, um die Temperatur, allgemeine Betriebsbedingungen, andere elektrische Parameter und Ereignisse des jeweiligen Leistungs-/Überwachungs-/Steuermoduls (4) unter Kontrolle zu halten;
wobei das Beleuchtungssystem (1) **dadurch gekennzeichnet ist, dass** die zentrale Steuereinheit (6) ferner so ausgebildet ist, dass sie an die Leistungs-/Überwachungs-/Steuermodule (4) des Beleuchtungssystems (1) Aktualisierungsversionen der Firmware und Konfigurationsnachrichten der Leistungs-/Überwachungs-/Steuermodule (4) sendet, wobei die zentrale Steuereinheit (6) so ausgebildet ist, dass sie die codierten Nachrichten sowie die Aktualisierungsversionen der Firmware und Konfigurationsnachrichten der Leistungs-/Überwachungs-/Steuermodule (4) durch Stromleitungskommunikation entlang des Stromkabels (2) überträgt, wobei die zentrale Steuereinheit (6) und die Leistungs-/Überwachungs-/Steuermodule (4) ausgebildet sind, um unter Verwendung einer Stromleitungskommunikation, die entlang des Stromkabels (2) gesendet wird und mittels Austausch der codierten Nachrichten, einen Diagnosealgorithmus auszuführen, wobei der Diagnosealgorithmus in zwei Teile unterteilt ist:
- einen ersten Teil, der periodisch und automatisch ausgeführt wird, um die Hauptparameter eines jeden Leistungs-/Überwachungs-/Steuermoduls (4) zu erhalten, um zu überprüfen, ob mittelschwere oder schwerwiegende Störungen vorliegen, und
- einen zweiten Teil, der auf Anfrage speziell für ein einzelnes Leistungs-/Überwachungs-/Steuermodul (4) in einem ausgewählten Zeitpunkt ausführbar ist, um weitere Informationen und weitere physikalische Parameter zu erhalten, die am Leistungs-/Überwachungs-/Steuermodul gemessene Temperatur, Betriebsparameter, Firmwareversion, die auf dem Leistungs-/Überwachungs-/Steuermodul (4) vorhanden ist, umfassen, wobei der zweite Teil von der zentralen Steuereinheit (6) und den Leistungs-/Überwachungs-/Steuermodulen (4) mittels Austausch der codierten Nachrichten zwischen der zentralen Steuereinheit (6) und den Leistungs-/Überwachungs-/Steuermodulen (4) ausgeführt wird, wenn ein Steuerbediener feststellt, dass eine Fehlfunktion auftritt,
wobei die zentrale Steuereinheit (6) eine Kommunikations- und Steuereinheit (17) umfasst, die ausgebildet ist, um die codierten Nachrichten durch Stromleitungskommunikation entlang des Stromkabels (2) zum Steuern der Leistungs-/Überwachungs-/Steuermodule (4) zu empfangen/übertragen, um jeweilige LED-Beleuchter (3) ein- und auszuschalten, mit anderen Leistungs-/Überwachungs-/Steuermodulen (4) zu synchronisieren, Konfigurationsparameter zu modifizieren, Status- und Diagnoseinformationen zu übertragen und
wobei die zentrale Steuereinheit (6) ferner ein mit der Kommunikations- und Steuereinheit (17) verbundenes Touchscreen-Panel (9) umfasst, das eine Benutzerschnittstelle umfasst, über die codierte Nachrichten, die an die Leistungs-/Überwachungs-/Steuermodule (4) übertragen und von diesen empfangen werden, sowie Ergebnisse der durchgeführten Diagnosevorgänge angezeigt werden und über die Wartungsvorgänge durchgeführt werden, alle mittels Stromleitungskommunikation entlang des Stromkabels (2), wobei mindestens eine Anforderung von Diagnosedaten an einem einzelnen Modul unter Verwendung der Schnittstelle des System-Touchscreen-Panels (9) erfolgt.

2. Beleuchtungssystem (1), wobei die elektronische Verarbeitungsvorrichtung eines jeden Leistungs-/Überwachungs-/Steuermoduls (4) eine Kommunikations- und Steuereinheit (7) zum Austausch von codierten Nachrichten mit der zentralen Steuereinheit (6) und zur Verwaltung des jeweiligen LED-Beleuchters (3), eine Steuerschaltung (8) zum Steuern jeweils des Ein- bzw. Ausschaltens des jeweiligen LED-Beleuchters (3) umfasst.

3. Beleuchtungssystem (1) nach Anspruch 1 oder 2, ferner umfassend einen Webserver (16), der durch eine geeignete Schnittstelle mit dem Stromkabel (2) verbunden ist, um zusätzliche Dienste sicherzustellen, wobei die zusätzlichen Dienste das Protokollieren von Ereignissen oder den Zugriff über die Webschnittstelle umfassen.

4. Beleuchtungssystem (1) nach Anspruch 1 und 3, wobei der Webserver (16) ausgebildet ist, um weitere Steuer- und Diagnosevorgänge, die von einer entfernten Position aus durchzuführen sind, zu erlauben sowie Firmwareaktualisierungen sowohl an den Modulen als auch an der Kommunikations- und Steuereinheit (17) durchzuführen.

5. Beleuchtungssystem (1) nach einem der Ansprüche 1 bis 4, umfassend eine Steuerkabine (15), wobei sich die zentrale Steuereinheit (6) innerhalb der Steuerkabine (15) befindet.

6. Beleuchtungssystem (1) nach einem der Ansprüche 1 bis 5, das zur Verwendung für Signalisierungszwecke in einem Flughafenbereich ausgebildet ist, wobei die LED-Beleuchter (3) auf erhöhten Trägern positioniert sind und/oder in geeignete Gehäuse entlang der Landebahnen und in nahe gelegenen Bereichen eingebaut sind.

## Revendications

1. Système d'éclairage clignotant (1), comprenant :
- une pluralité d'illuminateurs à LED (3),
- un câble d'alimentation (2) connecté électriquement à la pluralité d'illuminateurs à LED (3) et configuré pour alimenter ladite pluralité d'illuminateurs à LED (3) ;
- une pluralité de modules d'alimentation/de surveillance/de contrôle (4), chaque module d'alimentation/de surveillance/de contrôle (4) étant associé à un illuminateur à LED (3) respectif et équipé d'un dispositif de traitement électronique conçu pour effectuer des opérations de surveillance et de contrôle de l'illuminateur à LED (3) respectif et pour traiter des données sur la base d'un micrologiciel prédéterminé enregistré en son sein ;
- un dispositif d'alimentation (5) connecté électriquement audit câble d'alimentation (2) ;
- une unité de contrôle centrale (6) configurée pour envoyer et recevoir des messages codés vers et depuis chaque module d'alimentation/de surveillance/de contrôle (4), dans lequel le dispositif de traitement électronique de chaque module d'alimentation/de surveillance/de contrôle (4) est configuré pour traiter les messages codés reçus afin de déterminer les temps d'allumage et d'extinction de l'illuminateur à LED (3) respectif, vérifier la synchronisation avec l'allumage et l'extinction d'autres illuminateurs à LED (3), effectuer des opérations de diagnostic et envoyer des messages codés correspondant aux résultats desdites opérations de diagnostic, et d'autres opérations pour maintenir sous contrôle la température, les conditions générales de fonctionnement, d'autres paramètres électriques et les événements du module d'alimentation/de surveillance/de contrôle (4) respectif ;
le système d'éclairage (1) étant **caractérisé en ce que** l'unité de contrôle centrale (6) est de plus configurée pour envoyer, vers les modules d'alimentation/de surveillance/de contrôle (4) du système d'éclairage (1), des versions de mise à jour du micrologiciel et des messages de configuration des modules d'alimentation/de surveillance/de contrôle (4), dans lequel l'unité de contrôle centrale (6) est configurée de manière à transmettre les messages codés, ainsi que les versions de mise à jour du micrologiciel et les messages de configuration des modules d'alimentation/de surveillance/de contrôle (4) par courants porteurs en ligne le long du câble d'alimentation (2), dans lequel l'unité centrale de contrôle (6) et les modules d'alimentation/de surveillance/de contrôle (4) sont configurés pour exécuter, en utilisant les courants porteurs en ligne envoyés le long du câble d'alimentation (2) et au moyen de l'échange des messages codés, un algorithme de diagnostic, l'algorithme de diagnostic étant divisé en deux parties :
- une première partie exécutée périodiquement et automatiquement pour obtenir les principaux paramètres de chaque module d'alimentation/de surveillance/de contrôle (4) afin de vérifier la présence de dysfonctionnements de nature moyenne ou grave, et
- une deuxième partie exécutable spécifiquement sur demande pour un seul module d'alimentation/de surveillance/de contrôle (4) à un moment choisi, pour obtenir des informations supplémentaires et d'autres paramètres physiques comprenant la température mesurée sur le module d'alimentation/de surveillance/de contrôle, les paramètres de fonctionnement, la version du micrologiciel présent sur le module d'alimentation/de surveillance/de contrôle (4), la deuxième partie étant exécutée, par l'unité centrale de contrôle (6) et les modules d'alimentation/de surveillance/de contrôle (4) au moyen d'un échange de messages codés entre l'unité centrale de contrôle (6) et les modules d'alimentation/de surveillance/de contrôle (4), lorsqu'un opérateur de contrôle détecte qu'un dysfonctionnement se produit,
dans lequel l'unité de contrôle centrale (6) comprend une unité de communication et de contrôle (17), étant configurée pour recevoir/transmettre les messages codés par courants porteurs en ligne le long dudit câble d'alimentation (2) pour contrôler lesdits modules d'alimentation/de surveillance/de contrôle (4) afin d'allumer/éteindre les illuminateurs à LED (3) respectifs, se synchroniser avec d'autres modules d'alimentation/de surveillance/de contrôle (4), modifier les paramètres de configuration, transmettre des informations d'état et de diagnostic, et
dans lequel l'unité centrale de contrôle (6) comprend de plus un panneau à écran tactile (9) connecté à ladite unité de communication et de contrôle (17), qui met en œuvre une interface utilisateur par laquelle des messages codés sont transmis auxdits modules d'alimentation/de surveillance/de contrôle (4) et reçus de ceux-ci, ainsi que les résultats des opérations de diagnostic effectuées sont affichés et par l'intermédiaire desquels les opérations de maintenance sont effectuées, le tout au moyen de courants porteurs en ligne le long dudit câble d'alimentation (2), dans lequel au moins une demande de données de diagnostic sur un seul module est effectuée en utilisant l'interface du panneau à écran tactile (9) du système.

2. Système d'éclairage (1), dans lequel le dispositif de traitement électronique de chaque module d'alimentation/de surveillance/de contrôle (4) comprend une unité de communication et de contrôle (7), pour l'échange de messages codés avec l'unité centrale de contrôle (6) et la gestion de l'illuminateur à LED (3) respectif, un circuit de commande (8) servant à commander l'allumage et, respectivement, l'extinction de l'illuminateur à LED (3) respectif.

3. Système d'éclairage (1) selon la revendication 1 ou 2, comprenant de plus un serveur Web (16) connecté par une interface appropriée au câble d'alimentation (2) pour assurer des services supplémentaires, les services supplémentaires comprenant l'enregistrement des événements ou l'accès par interface Web.

4. Système d'éclairage (1) selon les revendications 1 et 3, dans lequel le serveur Web (16) est configuré pour permettre d'autres opérations de contrôle et de diagnostic à distance, ainsi que pour effectuer des mises à jour du micrologiciel à la fois sur les modules et sur l'unité de communication et de contrôle (17).

5. Système d'éclairage (1) selon l'une quelconque des revendications 1 à 4, comprenant une cabine de contrôle (15), dans lequel l'unité de contrôle centrale (6) est située à l'intérieur de la cabine de contrôle (15).

6. Système d'éclairage (1) selon l'une quelconque des revendications 1 à 5, configuré pour être utilisé à des fins de signalisation dans une zone d'aéroport, dans lequel les illuminateurs à LED (3) sont positionnés sur des supports surélevés et/ou intégrés dans des logements appropriés, le long des pistes d'atterrissage et des zones voisines.
